(19) Europäisches Patentamt
European Patent Office
Office européen des brevets

(11) **EP 4 450 237 A1**

(12) **EUROPÄISCHE PATENTANMELDUNG**

(43) Veröffentlichungstag:
    23.10.2024  Patentblatt 2024/43

(51) Internationale Patentklassifikation (IPC):
    **B25J 9/16** (2006.01)

(21) Anmeldenummer: 24163926.9

(52) Gemeinsame Patentklassifikation (CPC):
    **B25J 9/1633;** B25J 9/1643; G05B 2219/39261;
    G05B 2219/39319; G05B 2219/39322;
    G05B 2219/39338; G05B 2219/39346;
    G05B 2219/39348; G05B 2219/42126

(22) Anmeldetag: **15.03.2024**

(84) Benannte Vertragsstaaten:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Benannte Erstreckungsstaaten:
    **BA**
    Benannte Validierungsstaaten:
    **GE KH MA MD TN**

(30) Priorität: **18.04.2023  DE 102023109766**

(71) Anmelder: **Deutsches Zentrum für Luft- und
    Raumfahrt e.V.
    53227 Bonn (DE)**

(72) Erfinder:
    • **Iskandar, Maged
      82205 Gilching (DE)**
    • **Dietrich, Alexander
      85716 Unterschleißheim (DE)**
    • **Ott, Christian
      1100 Wien (AT)**

(74) Vertreter: **dompatent von Kreisler Selting Werner -
    Partnerschaft von Patent- und Rechtsanwälten
    mbB
    Deichmannhaus am Dom
    Bahnhofsvorplatz 1
    50667 Köln (DE)**

(54)    **VERFAHREN ZUM STEUERN EINER ROBOTEREINRICHTUNG**

(57)    Bei einem Verfahren zum Steuern einer Robotereinrichtung mit einem Endeffektor, wobei mittels einer Robotersteuerungseinrichtung die Robotereinrichtung gesteuert wird, ist vorgesehen, dass die Robotersteuerungseinrichtung die Robotereinrichtung mittels einer erweiterten kartesische Impedanzsteuerung steuert, bei der eine hybride Impedanz-Kraft-Steuerung durchgeführt wird, wobei ein nachgiebiges Verhalten mittels Impedanzsteuerung in zumindest einer freien Bewegungsrichtung und eine direkte Kraftsteuerung in zumindest einer eingeschränkten Richtungen ausgeführt wird, wobei bei der direkten Kraftsteuerung die dynamische Effekte, die aufgrund der Bewegung des Endeffektors auftreten, berücksichtigt werden.

Fig.1

**Beschreibung**

Die Erfindung betrifft ein Robotereinrichtung mit einem Endeffektor nach Anspruch 1, sowie eine Vorrichtung zum Steuern einer Robotereinrichtung mit einem Endeffektor nach Anspruch 8.

In der Robotik ist eine gut definierte physikalische Interaktion eines Roboters mit der Umgebung eine wesentliche Voraussetzung für eine große Anzahl von realen Anwendungen. Die Steuerung des Robotersystems kann direkt erfolgen, um gewünschte zeitabhängige oder konstante Kontaktkräfte zu realisieren, oder indirekt, indem ein dynamisches Verhalten des gesteuerten Roboters während der physischen Interaktion festgelegt wird, z. B. durch Impedanz- oder Admittanzsteuerung. Die Interaktionskräfte resultieren also indirekt aus der aktiven Steuerung der physikalischen Parameter des Roboters, z. B. Trägheit, Dämpfung und Steifigkeit.

In der Robotik bezieht sich die Impedanzsteuerung auf eine Methode zur Steuerung des Verhaltens von Robotern basierend auf ihrer Impedanz. Mit der Impedanzsteuerung können Roboter auf unvorhergesehene Änderungen in ihrer Umgebung reagieren und sich an unterschiedliche Aufgaben anpassen, indem sie ihre Impedanz dynamisch anpassen. Dies ermöglicht es dem Roboter, sanft mit Objekten in Kontakt zu treten und ihre Bewegungen zu steuern, um die gewünschten Aufgaben auszuführen.

Im Allgemeinen wurde der Ansatz der Impedanzsteuerung in der Robotik im Laufe der letzten Jahrzehnte entwickelt und ausgiebig eingesetzt. Das Konzept ermöglicht eine aktive Nachgiebigkeit zur Bewältigung von Umweltunsicherheiten und kann eine passive Interaktion ermöglichen. Bei der klassischen Impedanzsteuerung kann man gezielt gewünschte Kräfte und Momente auf die Umgebung ausüben, indem man entweder die gewünschte Position (virtuelle Position) verschiebt oder eine Vorwärtskraft zusätzlich zur nominalen Steuerungsaktion hinzufügt. Das bedeutet, dass die externen Kräfte auf dieser Ebene des Reglerentwurfs nicht explizit berücksichtigt werden.

Bei Steuerungen von Robotersystemen mit indirekter Kraftsteuerung legt die Umgebung dem robotischen Endeffektor geometrische Beschränkungen auf.

Der Endeffektor ist der Teil des Roboters, der mit der Umgebung interagiert. Er kann eine Vielzahl von Formen und Funktionen haben, abhängig von der Anwendung und dem spezifischen Bedarf. Ein Endeffektor kann ein Gerät oder Werkzeug sein. Er kann am Ende eines Roboterarms angeordnet sein. Mit einem Endeffektor kann beispielsweise eine bestimmte Aufgabe ausgeführt werden. Beispiele für Endeffektoren können Greifer, Werkzeuge oder andere Einrichtungen sein.

Ungenauigkeiten im Modell der Umgebung können zu hohen Kontaktkräften führen, da die gewünschte Kraft indirekt über den Sollwert eines Impedanzreglers erreicht wird. Um die gewünschten Kräfte präzise aufzubringen, müssen die Geometrie und die Lage der Umgebung (Oberfläche) mit hoher Genauigkeit bekannt sein, was in vielen realen Anwendungen nahezu unmöglich ist.

Im Gegensatz dazu bietet die Steuerung des Robotersystems mit direkter Kraftkontrolle definierter Interaktionen. Ein detailliertes Umgebungsmodell ist dabei in der Regel nicht verfügbar. Die direkte Kraftsteuerung ist eine Methode zur Steuerung des Roboters, die auf der Messung von Kräften und Momenten basiert, die auf den Endeffektor einwirken. Die direkte Kraftsteuerung ermöglicht eine präzise Kontrolle des Endeffektors durch Eingabe von Kraft- oder Drehmomentbefehlen. In der Praxis ist eine direkte Kraftsteuerung in bestimmten Richtungen der Aufgabe oft wünschenswert, während in anderen Richtungen eine präzise Bewegungssteuerung erforderlich ist. Bekannt sind hybriden Strukturen der Positions- und Kraftsteuerung, die eine direkte Kraftsteuerung in eingeschränkten Aufgabenrichtungen ermöglichen.

Es besteht jedoch zunehmend Bedarf, die Verfahren und Robotersysteme zum Steuern einer Robotereinrichtung zu verbessern.

Die Aufgabe der vorliegenden Erfindung ist es daher ein Robotersystem und eine Robotersystemsteuerung zu schaffen, das bzw. die verbessert ist.

Zur Lösung dieser Aufgabe dienen die Merkmale der Ansprüche 1 und 8.

Die Erfindung sieht in vorteilhafter Weise vor, dass die Robotersteuerungseinrichtung den Roboter mittels einer erweiterten kartesische Impedanzsteuerung steuert, bei der eine hybride Impedanz-Kraft-Steuerung durchgeführt wird, wobei ein nachgiebiges Verhalten mittels Impedanzsteuerung in zumindest einer freien Bewegungsrichtung und eine direkte Kraftsteuerung in zumindest einer eingeschränkten Richtungen ausgeführt wird, wobei bei der direkten Kraftsteuerung die dynamische Effekte, die aufgrund der Bewegung des Endeffektors auftreten, berücksichtigt werden.

Bei einigen Manipulationsaufgaben ist es von Vorteil, schnelle Bewegungen auszuführen, während die Robotereinrichtung gleichzeitig eine bestimmte Teilaufgabe der Interaktion ausführt. Das Polieren, Wischen und Finishen von Oberflächen sind typische Aufgaben, bei denen eine gewünschte Kontaktkraft in Normalrichtung auf die Oberfläche gehalten werden sollen. Die vorliegende Erfindung hat den Vorteil, dass es nun möglich ist solche Aufgaben, die auch physische Interaktion beinhalten, mit hoher Geschwindigkeit auszuführen. Die vorliegende Erfindung hat den Vorteil, dass das Kontaktverhalten bei schneller Bewegung feinfühlig geregelt werden kann. Gemäß der vorliegenden Erfindung werden dynamischen Effekte in den Steuerungsentwurf einbezogen. Im Gegensatz dazu bewegen sich bereits bekannte Roboter bei Kraftregelungsaufgaben nur langsam oder sind stationär.

Üblicherweise wird der Operationsraum des Robotersystems durch eine Selektionsmatrix in Bewegungs- und Kraftunterräume unterteilt, um die Position in der ungebundenen Aufgabenrichtung zu steuern. Die Formulierung ermöglicht die Zuweisung von Beschränkungen im Aufgabenraum. Sie kann auch als gemischte direkte und indirekte Kraftsteuerung interpretiert werden, da das vorgeschlagene Schema eine genauere Kraftverfolgung in eingeschränkten Richtungen und ein nachgiebiges Verhalten in den freien Aufgabenrichtungen aufweist.

Gemäß der vorliegenden Erfindung werden die geschwindigkeitsabhängigen Kopplungsterme bei der Ausführung schneller Bewegungen berücksichtigt. Darüber hinaus kanne eine Entkopplung von den angewandten Steuerungsaktionen in den Bewegungsrichtungen erfolgen und die Wirkung externer Kräfte kompensiert werden.

Gemäß der vorliegenden Erfindung ist eine erweiterte kartesische Impedanzsteuerung vorgesehen, die die Kraftverfolgung auf hybride Weise ermöglicht. Die vorgeschlagene hybride Impedanz-Kraft-Steuerung zeichnet sich durch ein nachgiebiges Verhalten in der freien (Bewegungs-)Richtung und eine direkte Kraftsteuerung in den eingeschränkten Richtungen aus. Es können Einschränkungen für bestimmte Richtungen in Bezug auf den Endeffektor des Roboters auferlegt werden. Die Erfindung bietet eine dynamische Entkopplung zwischen den Kraft- und Bewegungsrichtungen.

Die dynamischen Effekte können im Regelungsgesetz für die direkte Kraftsteuerung zumindest mit dem folgenden Term berücksichtigt werden:

$$\Lambda_{\dot{\Phi}}(J_{\dot{\Phi}}M^{-1}C - \dot{J}_{\dot{\Phi}})\dot{q}$$

.

Das Regelungsgesetz für die direkte Kraftsteuerung kann wie folgt lauten:

$$\begin{aligned}
F_{\dot{\Phi}}^{\mathrm{ctrl}} = {}& + F^{\mathrm{des}}(t) \\
& - \Lambda_{\dot{\Phi}}J_{\dot{\Phi}}M^{-1}(J_{\dot{x}}^T F_{\dot{x}}^{\mathrm{ctrl}} + J_v^T F_v^{\mathrm{ctrl}}) \\
& + \Lambda_{\dot{\Phi}}J_{\dot{\Phi}}M^{-1}(J_{\dot{x}}^T F_{\dot{x}}^{\mathrm{ext}} + J_v^T F_v^{\mathrm{ext}}) \\
& + \Lambda_{\dot{\Phi}}(J_{\dot{\Phi}}M^{-1}C - \dot{J}_{\dot{\Phi}})\dot{q} \ .
\end{aligned}$$

Wobei

$J_{\dot{\Phi}}$ die Jabobimatrix $J_{\dot{\Phi}}(q)$ ist und $J_{\dot{\Phi}}(q) = \partial\Phi(q)/\partial q \in \mathbb{R}^{c \times n}$ entspricht,

$\dot{J}_{\dot{\Phi}}$ die Ableitung von $J_{\dot{\Phi}}$ ist,

$J_{\dot{\Phi}}^T$ die transponierte Matrix von $J_{\dot{\Phi}}$ ist

wobei $\Phi(q)$ für die kinematischen, holonomen Randbedingungen $\Phi(q) \in \mathbb{R}^c$ am Endeffektor steht,

$M = M(q)$, wobei $M(q) \in \mathbb{R}^{n \times n}$ ist und $M(q)$ die Trägheitsmatrix ist,

$C = C(q, \dot{q}) \in \mathbb{R}^{n \times n}$, wobei $C(q, \dot{q}) \in \mathbb{R}^{n \times n}$ die Coriolis-/Zentrifugalmatrix ist,

$\dot{q}$ die Ableitung von $q$ ist, wobei $q \in \mathbb{R}^n$ ist und für den Vektor der n-gelenkseitigen Positionen steht.

In dem Regelungsgesetz kann für die direkte Kraftsteuerung die dynamische Kopplung mit den äußeren Kräften in den freien Bewegungsrichtungen und im Nullraum kompensiert werden.

Die direkte Kraftsteuerung kann dann eingesetzt wird, wenn der Kontakt zur Umgebung bereits hergestellt ist.

Beim Übergang von Impedanzsteuerung zu direkter Kraftsteuerung kann der Übergang fließend erfolgen, dadurch, dass ein Zwischensollwert verwendet wird, so dass sich der Steuereingang nicht sofort ändert, wobei dies mit Hilfe von Aktivierungsvariablen geschieht, die sich kontinuierlich von 0 auf 1 ändern.

Zur Reduzierung der stationären Fehler kann in der Kontaktkraft der folgende zusätzlich Integralterm berücksichtigt wird

$$- \boldsymbol{K}_{\mathrm{fp}} \boldsymbol{F}_{\mathrm{e}} - \boldsymbol{K}_{\mathrm{fd}} \dot{\boldsymbol{F}}_{\mathrm{e}} - \boldsymbol{K}_{\mathrm{fi}} \int_0^t \boldsymbol{F}_{\mathrm{e}} \, dt$$

Gemäß der vorliegenden Erfindung kann ein Robotersystem zum Steuern einer Robotereinrichtung vorgesehen sein, mit

- einer Robotereinrichtung mit Endeffektor, und
- einer Robotersteuerungseinrichtung zum Steuern der Robotereinrichtung, wobei die Robotersteuerungseinrichtung dazu ausgebildet ist, den Roboter mittels einer erweiterten kartesische Impedanzsteuerung zu steuern, bei der eine hybride Impedanz-Kraft-Steuerung durchführbar ist, wobei ein nachgiebiges Verhalten mittels Impedanzsteuerung in zumindest einer freien Bewegungsrichtung und eine direkte Kraftsteuerung in zumindest einer eingeschränkten Richtungen ausführbar ist, wobei bei der direkten Kraftsteuerung die dynamische Effekte, die aufgrund der Bewegung des Endeffektors auftreten, berücksichtigt sind.

Die Robotersteuerungseinrichtung kann dazu ausgebildet sein, dass die dynamischen Effekte im Regelungsgesetz für die direkte Kraftsteuerung zumindest mit dem folgenden Term berücksichtigt werden:

$$\Lambda_{\dot{\Phi}} (J_{\dot{\Phi}} M^{-1} C - \dot{J}_{\dot{\Phi}}) \dot{q}$$

Die Robotersteuerungseinrichtung kann dazu ausgebildet sein, dass das Regelungsgesetz für die direkte Kraftsteuerung wie folgt lautet:

$$\begin{aligned} \boldsymbol{F}_{\dot{\Phi}}^{\mathrm{ctrl}} = & + \boldsymbol{F}^{\mathrm{des}}(t) \\ & - \Lambda_{\dot{\Phi}} J_{\dot{\Phi}} M^{-1} (J_{\dot{x}}^T \boldsymbol{F}_{\dot{x}}^{\mathrm{ctrl}} + J_{\boldsymbol{v}}^T \boldsymbol{F}_{\boldsymbol{v}}^{\mathrm{ctrl}}) \\ & + \Lambda_{\dot{\Phi}} J_{\dot{\Phi}} M^{-1} (J_{\dot{x}}^T \boldsymbol{F}_{\dot{x}}^{\mathrm{ext}} + J_{\boldsymbol{v}}^T \boldsymbol{F}_{\boldsymbol{v}}^{\mathrm{ext}}) \\ & + \Lambda_{\dot{\Phi}} (J_{\dot{\Phi}} M^{-1} C - \dot{J}_{\dot{\Phi}}) \dot{q} \end{aligned}$$

Die Robotersteuerungseinrichtung kann dazu ausgebildet sein, das Regelungsgesetz auszuführen, bei dem für die direkte Kraftsteuerung die dynamische Kopplung mit den äußeren Kräften in den freien Bewegungsrichtungen und im Nullraum kompensiert wird.

Die Robotersteuerungseinrichtung kann dazu ausgebildet sein, dass die direkte Kraftsteuerung dann einsetzbar ist, wenn der Kontakt zur Umgebung bereits hergestellt ist.

Die Robotersteuerungseinrichtung kann dazu ausgebildet sein, dass beim Übergang von Impedanzsteuerung zu direkter Kraftsteuerung der Übergang fließend erfolgt, dadurch, dass ein Zwischensollwert verwendbar ist, so dass sich der Steuereingang nicht sofort ändert, wobei dies mit Hilfe von Aktivierungsvariablen geschieht, die sich kontinuierlich von 0 auf 1 ändern.

Die Robotersteuerungseinrichtung kann dazu ausgebildet sein, dass zur Reduzierung der stationären Fehler in der Kontaktkraft der folgende zusätzlich Integralterm berücksichtigbar ist

$$- \boldsymbol{K}_{\mathrm{fp}} \boldsymbol{F}_{\mathrm{e}} - \boldsymbol{K}_{\mathrm{fd}} \dot{\boldsymbol{F}}_{\mathrm{e}} - \boldsymbol{K}_{\mathrm{fi}} \int_0^t \boldsymbol{F}_{\mathrm{e}} \, dt$$

Im Folgenden wird unter Bezugnahme auf die Zeichnungen Ausführungsbeispiele der vorliegenden Erfindung näher erläutert.

Es zeigen schematisch:

Fig. 1    zeigt ein Robotersystem, bei dem der Endeffektor eine gebogene Oberfläche poliert,

Fig. 2     zeigt die Ergebnisse einer ersten Simulation,

Fig. 3     zeigt Leistung der Kraftverfolgung gemäß der vorliegenden Erfindung,

Fig. 4     zeigt Versuch Nr. 2, bei dem die Bewegung auf einer ebenen Fläche mit bogenförmigem Verlauf betrachtet wird,

Fig. 5     zeigt Versuch Nr. 3a, bei dem mit einer Robotereinrichtung 2 eine Oberfläche S schnell poliert werden soll,

Fig. 6     zeigt die Trajektorien des Endeffektors,

Fig. 7     zeigt Ergebnisse zu Versuch gemäß Fig. 6,

Fig. 8     zeigt die Vorder- und dreidimensionale Ansichten der gewünschten bzw. tatsächlichen Trajektorien,

Fig. 9     zeigt Versuch Nr. 4b (zeitlich veränderliches Kraftprofil).

Im Stand der Technik ist es bekannt, dass die Starrkörperdynamik eines Manipulators eines Robotersystems mit n Freiheitsgraden (DOF) wie folgt ausgedrückt werden kann

$$M(q)\ddot{q} + C(q, \dot{q})\dot{q} + g(q) = \tau + \tau^{\text{ext}} \quad (1)$$

Hierin steht der Vektor $q \in \mathbb{R}^n$ für die n-gelenkseitigen Positionen. Die Gravitationseffekte wird durch $g(q) \in \mathbb{R}^n$ dargestellt, und $M(q) \in \mathbb{R}^{n \times n}$ und $C(q, \dot{q}) \in \mathbb{R}^{n \times n}$ stehen jeweils für die Trägheits- und Coriolis-/Zentrifugalmatrizen. Das externe Drehmoment wird durch $\tau_{ext}$ beschrieben und die verallgemeinerten Gelenkkräfte durch $\tau$ beschrieben. Die Gelenkreibung wird in der Dynamik nicht explizit berücksichtigt und es wird angenommen, dass sie durch modellbasierte oder beobachterbasierte Methoden kompensiert wird. Die Gelenkkräfte werden im Folgenden als Steuereingänge angenommen. Die aufgebrachten externen Momente und Kräfte (externe wrench) $F^{\text{ext}} \in \mathbb{R}^m$ werden durch eine Jacobi-Matrix $J(q) \in \mathbb{R}^{m \times n}$ auf externe Gelenkmomente abgebildet, und zwar gemäß

$$\tau^{\text{ext}} = -J(q)^T F^{\text{ext}} \quad (2)$$

wobei m=6 ist, wenn der gesamte kartesische Raum betrachtet wird. Die Geschwindigkeit $\dot{x} \in \mathbb{R}^m$ im Betriebsraum wird beschrieben durch die Abbildung

$$\dot{x} = \begin{pmatrix} \dot{\chi} \\ \omega \end{pmatrix} = \underbrace{\begin{pmatrix} J_{\dot{\chi}}(q) \\ J_\omega(q) \end{pmatrix}}_{J(q)} \dot{q} \quad (3)$$

Dabei sind $\dot{\chi}$ und $\omega$ Translations- und Rotationsgeschwindigkeiten, und $J_{\dot{\chi}}$ **und** $J_\omega$ stellen die zugehörigen linearen und rotatorischen Teile der Jacobimatrix dar. Das nachgiebige Verhalten des Endeffektors kann durch die klassische Impedanzsteuerung erreicht werden

$$\tau_{\text{imp}} = J(q)^T F_{\text{imp}} + g(q) ,$$

$$F_{\mathrm{imp}} = -\left(\frac{\partial V(\tilde{x})}{\partial x}\right)^T - D_x \dot{x}\;,$$

wobei $F_{imp}$ der Aufgabenraum-Wrench (Aufgabenraum der Momente und Kräfte) zur Realisierung eines gewünschten Feder-Dämpfer-Verhaltens und $V(\dot{x})$ die entsprechende positiv definite Potentialfunktion mit der virtuellen Federauslenkung $\tilde{x} = x - x$ ist, wobei $X$ und $x_{\mathrm{des}} \in \mathbb{R}^m$ die tatsächlichen und gewünschten Aufgaben-raumkoordinaten sind. Die positiv definite Dämpfungsmatrix $D_x \in \mathbb{R}^{m \times m}$ wird in der Regel so ermittelt, dass eine kritische Dämpfung für unterschiedliche Konfigurationen und verschiedene Einstellungen der kartesischen Steifigkeit erreicht wird. Wenn der Roboter mit einer Drehmomenterfassung ausgestattet ist, kann die Rückkopplung des Gelenkdrehmoments genutzt werden, um eine gewünschte Dynamik zu realisieren, z. B. um die Motorträgheit zu verringern, eine Drehmomentschnittstelle auf der Gelenkseite bereitzustellen und Schwingungen zu dämpfen. Dies hat sich als vorteilhafte Steuerungsstrategie erwiesen, wenn die Gelenkflexibilität beim Steuerungsentwurf berücksichtigt wird.

Im Falle von Umgebungsbeschränkungen ist die Regulierung der direkten Wechselwirkungskraft von Vorteil und in vielen Anwendungen wünschenswert. Die gewünschte Kraft kann einfach aufgebracht werden durch

$$\tau = \tau_{\mathrm{imp}} + \tau_{\mathrm{f}}\;,\quad \tau_{\mathrm{f}} = J(q)^T F^{\mathrm{des}} \tag{6}$$

oder, wie üblich, mit einer expliziten Kraftrückkopplungsschleife als

$$\tau_{\mathrm{f}} = J(q)^T \left(F^{\mathrm{des}} - K_{\mathrm{fp}} F_{\mathrm{e}} - K_{\mathrm{fd}} \dot{F}_{\mathrm{e}} - K_{\mathrm{fi}} \int_0^t F_{\mathrm{e}}\, dt\right) \tag{7}$$

wobei $F_{\mathrm{e}} \in \mathbb{R}^m$ den wrench-Fehler des Endeffektors darstellt, $K_{\mathrm{fp}}$, $K_{\mathrm{fd}}$ und $K_{\mathrm{fi}}$ positiv-definite proportionale, Ableitungs- bzw. Integralverstärkungsmatrizen sind. Darüber hinaus ist $\tau_{\mathrm{f}}$ das erzeugte Gelenkmoment zur aktiven Erreichung der gewünschten Kraft. Im Prinzip bietet dies eine verbesserte kartesische Kraftverfolgung und einen geringeren stationären Fehler aufgrund der der propositional-integralen Aktionen. Die dynamischen Effekte des Roboters in (7) werden oft vernachlässigt, da sich der Roboter typischerweise bei Interaktionsaufgaben mit spezifischen Kraftcharakteristiken sehr langsam (oder sogar stationär) bewegt. Verschiedene Ansätze können verwendet werden, um eine reine Kraftsteuerung in einer bestimmten Aufgabenrichtung zuzuweisen und die kombinierte Wirkung der Impedanzkontrolle wie in (6)-(7) zu entfernen. Zum Beispiel durch Aufteilung des Aufgabenraumes durch eine Auswahlmatrix oder setzen der jeweiligen Richtungssteifigkeit auf Null und Anwendung einer einfachen Überlagerung.

Die Kontrolle der Kontaktkraft auf beliebigen Oberflächen ist ein kritischer Aspekt in vielen Service- und Industrieroboteranwendungen. Dabei wird die im Stand der Technik bekannte Impedanzsteuerung intensiv für physikalische Interaktionsaufgaben eingesetzt. Die Berücksichtigung der geometrischen Bedingungen ist vorteilhaft, wenn eine präzise physikalische Interaktionskraft erwünscht ist. Die vorliegende Erfindung verwendet eine erweiterte kartesische Impedanzsteuerung, die die Kraftverfolgung auf hybride Weise ermöglicht. Die vorgeschlagene hybride Impedanz-Kraft-Kontrolle zeichnet sich durch ein nachgiebiges Verhalten in der freien (Bewegungs-) Richtung und eine direkte Kraftkontrolle in den eingeschränkten Richtungen. Die Formulierung erlaubt es, Einschränkungen für bestimmte Richtungen in Bezug auf den Endeffektor des Roboters aufzuerlegen. Die vorgeschlagene Erfindung bietet eine vorzugsweise vollständige dynamische Entkopplung zwischen der Kraft- und Bewegungsrichtungen. Im Folgenden wird die Effektivität der Erfindung bei der Anwendung hochdynamischer Bewegungen bei gleichzeitiger präziser Regelung der Kontaktkräfte mit unbekannten Oberflächen gezeigt.

Bei ausreichender Kenntnis der Umgebungsgeometrie sollte die Robotereinrichtung in der Lage sein, die gewünschten Interaktionskräfte auch bei hochdynamischen Bewegungen genau auszuüben. Der Operationsraum des Endeffektors soll die Dimension $m < n$. haben. Im Standardfall des vollständigen kartesischen Raums am Endeffektor $m = 6$ umfasst drei Translationfreiheitsgrade und drei Rotationsfreiheitsgrade. Außerdem werden diesem Operationsraum kinematische Beschränkungen der Dimension $c < m$ auferlegt. Da das betrachtete System in Bezug auf den Endeffektor kinematisch redundant ist, existiert ein zusätzlicher Nullraum der Dimension $p = n - m$ der zur gleichzeitigen Ausführung komplementärer Teilaufgaben genutzt werden kann.

Wenn das System kinematisch redundant ist, bedeutet dies, dass das System mehr Gelenke oder Freiheitsgrade aufweist, als für die Ausführung einer bestimmten Aufgaben erforderlich ist.

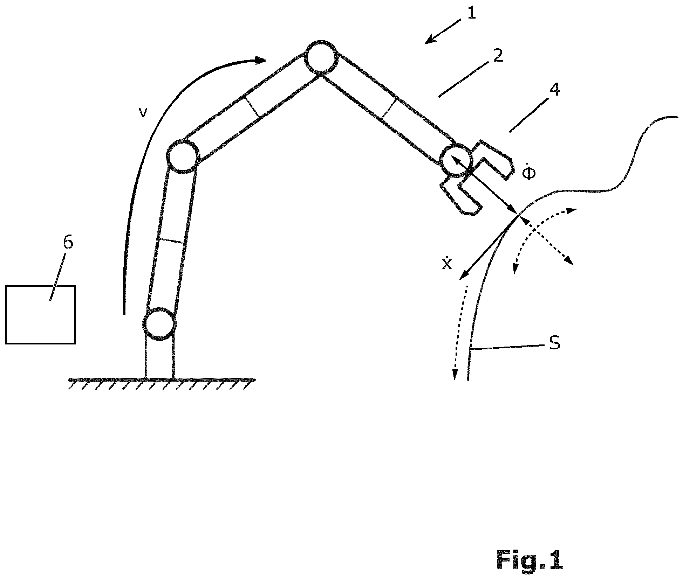

Fig. 1. Zeigt ein erfindungsgemäße Robotersystem 1. Das Robotersystem 1 weist eine Robotersteuerungseinrichtung 6 und eine Robotereinrichtung 2 auf. Die Robotereinrichtung 2 weist einen Endeffektor 4 auf. Das Konzept der eingeschränkten kartesischen Impedanzsteuerung lässt sich veranschaulichen, indem eine Normalkraft in Normalkraftrichtung auf eine Objektoberfläche S ausgeübt wird. Die Bewegung des Endeffektors wird durch die Umgebung in Richtung der Oberflächennormalen eingeschränkt, während der kartesische Impedanzregler in den übrigen Richtungen (Bewegungsrichtung) arbeitet. Darüber hinaus kann ein Nullraum mit verschiedenen Dimensionen existieren.

Die kinematischen, holonomen Randbedingungen $\Phi(q) \in \mathbb{R}^c$ am Endeffektor können wie folgt formuliert werden

$$\Phi(q) = \phi_0 \quad (8)$$

wobei die Konstante $\Phi_0 \in \mathbb{R}^c$ ist und $\Phi(q)$ eine Funktion mit konstantem Gradienten ist und als doppelt differenzierbar angenommen wird. Ohne Verlust an Allgemeinheit wird eine starre Umgebung betrachtet. Aufgrund von (8) kann man die Nebenbedingung wie folgt darstellen

$$J_{\dot{\Phi}}(q)\dot{q} = 0 \quad (9)$$

mit der Jacobimatrix $J_{\dot{\Phi}}(q) = \partial\Phi(q)/\partial q \in \mathbb{R}^{c \times n}$ darstellen. Bezeichnen wir $x(q) \in \mathbb{R}^{m-c}$ die verbleibenden, unbeschränkten Operationsraumkoordinaten mit der entsprechenden Jacobimatrix. Gemäß der obigen Spezifikation können die lokalen Nullraumgeschwindigkeiten $v(q) \in \mathbb{R}^{p\iota}$ unter Verwendung des Standard-

Aufgabenhierarchierahmens durch eine Jacobimatrix $J_v(q) \in \mathbb{R}^{p \times n}$ abgeleitet werden. Die gestapelte Jacobimatrix $\bar{J}(q) \in \mathbb{R}^{n \times n}$ ist gegeben durch

$$\begin{pmatrix} \dot{\Phi} \\ \dot{x} \\ v \end{pmatrix} = \underbrace{\begin{pmatrix} J_{\dot{\Phi}}(q) \\ J_{\dot{x}}(q) \\ J_v(q) \end{pmatrix}}_{\bar{J}(q)} \dot{q} \quad (10)$$

von der angenommen wird, dass sie im betrachteten Arbeitsraum invertierbar ist. Aufgrund der kinematischen Einschränkung $\dot{\Phi} = \mathbf{0}$ aus (9) ergibt die Lösung von (10) für $\dot{q}$

$$\dot{q} = \underbrace{\bar{J}(q)^{-1} \begin{pmatrix} 0 & 0 \\ I & 0 \\ 0 & I \end{pmatrix}}_{A(q)} \begin{pmatrix} \dot{x} \\ v \end{pmatrix} \quad (11)$$

mit $A(q) \in \mathbb{R}^{n \times (n-c)}$ dem Rang $n$ - $c$. Die Abhängigkeiten von den Zuständen werden in den meisten Notationen aus Gründen der Lesbarkeit weglassen. Die Bewegungsgleichungen (1) können umformuliert werden zu

$$\bar{M}\begin{pmatrix}\ddot{x}\\\dot{v}\end{pmatrix} + \bar{C}\begin{pmatrix}\dot{x}\\v\end{pmatrix} + \bar{g} = A^T\tau - \begin{pmatrix}F_{\dot{x}}^{\text{ext}}\\F_v^{\text{ext}}\end{pmatrix} \tag{12}$$

Dabei ist $\bar{M} = A^T M A \in \mathbb{R}^{(n-c)\times(n-c)}$ die Trägheitsmatrix für das eingeschränkte System und $C' = A^T M A + A^T C A$ bezeichnet die Coriolis- und Zentrifugalmatrix. Man beachte, dass die verallgemeinerten externen Kräfte $\tau^{\text{ext}}$ umformuliert wurden, um Wechselwirkungen in Bezug auf die Koordinaten $\dot{\Phi}$, $\dot{x}$ und $v$ durch die jeweiligen zusammengefassten, verallgemeinerten Kräfte zu beschreiben:

$$\tau^{\text{ext}} = -\bar{J}(q)^T\begin{pmatrix}F_{\dot{\Phi}}^{\text{ext}}\\F_{\dot{x}}^{\text{ext}}\\F_v^{\text{ext}}\end{pmatrix} \tag{13}$$

In der Beschränkungsrichtung gibt es keine Bewegung. Die dynamischen Kopplungen sind jedoch weiterhin von Interesse, da sie das Kontaktverhalten beeinflussen.

Betrachten wir (9) auf der Ebene der Beschleunigung,

$$\ddot{\Phi} = J_{\dot{\Phi}}\ddot{q} + \dot{J}_{\dot{\Phi}}\dot{q} = 0 \tag{14}$$

und der Substitution von (1) und (13) kann man die vorhergesagte modellbasierte Kraft $\hat{F}_{\dot{\Phi}}^{\text{ext}}$ in Zwangsrichtung wie folgt berechnen

$$\hat{F}_{\dot{\Phi}}^{\text{ext}} = \Lambda_{\dot{\Phi}}J_{\dot{\Phi}}M^{-1}(\tau - g - C\dot{q}) + \Lambda_{\dot{\Phi}}\dot{J}_{\dot{\Phi}}\dot{q}$$
$$- \Lambda_{\dot{\Phi}}J_{\dot{\Phi}}M^{-1}(J_{\dot{x}}^T F_{\dot{x}}^{\text{ext}} + J_v^T F_v^{\text{ext}}) \tag{15}$$

mit $\Lambda_{\dot{\Phi}} = (J_{\dot{\Phi}}M^{-1}J_{\dot{\Phi}}^T)^{-1}$. Die Steuerungsaktionen können wie folgt formuliert werden

$$\tau = g + \tau_{\dot{x}} + \tau_v + \tau_{\dot{\Phi}}\ , \tag{16}$$

$$\tau_{\dot{x}} = J_{\dot{x}}^T\left(M_x\ddot{x}_{\text{des}} + C_x\dot{x}_{\text{des}} - K_x\tilde{x} - D_x\dot{\tilde{x}}\right)\ , \tag{17}$$

$$\tau_v = NJ_v^T F_v^{\text{des}}\ , \tag{18}$$

$$\tau_{\dot{\Phi}} = J_{\dot{\Phi}}^T F_{\dot{\Phi}}^{\text{ctrl}}\ , \tag{19}$$

umfassend die Schwerkraftkompensation, die Aufgabenkontrollaktion $\tau_x$ für den unbeschränkten Endeffektorraum, $\tau_v$

für den Nullraum und die Kontrollaktion $\tau_{\dot{\Phi}}$ in Beschränkungsrichtung. Die gewünschten Aufgaben-Raumkoordinaten für den unbeschränkten Raum am Endeffektor werden durch $x_{\mathrm{des}}(t) \in \mathbb{R}^{m-c}$ beschrieben, und der jeweilige Fehler wird durch $\tilde{x} = x - x_{\mathbf{des}}(t)$ bezeichnet. Die Aufgabenspezifikation wird durch die Steifigkeits- und Dämpfungsmatrizen $K_x, D_x \in \mathbb{R}^{(m-c)\times(m-c)}$ charakterisiert, während die natürliche Trägheit mit (16) erhalten bleibt. Darüber hinaus sind $M_x, C_x \in \mathbb{R}^{(m-c)\times(m-c)}$ die Trägheit im Aufgabenraum und die Coriolis- bzw. Zentrifugalmatrizen. Die kinematische Redundanz des Roboters kann genutzt werden, um eine parallele Sekundäraufgabe im Nullraum der Endeffektoraufgabe zu erreichen. Die Nullraumebene erfordert den dynamisch konsistenten Nullraumprojektor $N \in \mathbb{R}^{n\times n}$ und die Aufgabenkraft $F_v^{\mathrm{des}} \in \mathbb{R}^p$. Um die Kraftverfolgung zu realisieren, muss (15) das gewünschte, zeitabhängige Kraftprofil $F^{\mathrm{des}}(t) \in \mathbb{R}^c$ ergeben, das den Wechselwirkungskräften entgegenwirkt als

$$\hat{F}_{\dot{\Phi}}^{\mathrm{ext}} - F^{\mathrm{des}}(t) = 0 \quad (20)$$

Setzt man (16)-(18) ein und substituiert (20) in (15), so erhält man

$$
\begin{aligned}
F_{\dot{\Phi}}^{\mathrm{ctrl}} = {}& + F^{\mathrm{des}}(t) \\
& - \Lambda_{\dot{\Phi}} J_{\dot{\Phi}} M^{-1} (J_{\dot{x}}^T F_{\dot{x}}^{\mathrm{ctrl}} + J_v^T F_v^{\mathrm{ctrl}}) \\
& + \Lambda_{\dot{\Phi}} J_{\dot{\Phi}} M^{-1} (J_{\dot{x}}^T F_{\dot{x}}^{\mathrm{ext}} + J_v^T F_v^{\mathrm{ext}}) \\
& + \Lambda_{\dot{\Phi}} (J_{\dot{\Phi}} M^{-1} C - \dot{J}_{\dot{\Phi}}) \dot{q} \ .
\end{aligned}
\qquad (21)
$$

wobei

$J_{\dot{\Phi}}$ die Jabobimatrix $J_{\dot{\Phi}}(q)$ ist und $J_{\dot{\Phi}}(q) = \partial\Phi(q)/\partial q \in \mathbb{R}^{c\times n}$ entspricht,

$J_{\dot{\Phi}}$' die Ableitung von $J_{\dot{\Phi}}$ ist,

$J_{\dot{\Phi}}^T$ die transponierte Matrix von $J_{\dot{\Phi}}$ ist

wobei $\Phi(q)$ für die kinematischen, holonomen Randbedingungen $\Phi(q) \in \mathbb{R}^c$ am Endeffektor steht,

$M = M(q)$, wobei $M(q) \in \mathbb{R}^{n\times n}$ ist und $M(q)$ die Trägheitsmatrix ist,

$C = C(q,\dot{q}) \in \mathbb{R}^{n\times n}$, wobei $C(q,\dot{q}) \in \mathbb{R}^{n\times n}$ die Coriolis-/Zentrifugalmatrix ist,

$\dot{q}$ die Ableitung von $q$ ist, wobei $q \in \mathbb{R}^n$ ist und für den Vektor der n-gelenkseitigen Positionen steht.

Einer der Hauptunterschiede der vorliegenden Erfindung bei der Kraftverfolgung ist die letzte Komponente in (21), die besonders bei hochdynamischen Bewegungen, wie sie in den Experimenten gezeigt werden, relevant wird. Man beachte, dass bei reibungsfreien Kontakten und dem Fehlen von externen Kräften in x- und *v*-Richtung die Terme $F_{\dot{x}}^{\mathrm{ext}}$ und $F_v^{\mathrm{ext}}$ in (21) verschwinden, was die Regelungsrückführung erheblich vereinfacht. Insbesondere kompensiert der dritte Term des Regelgesetzes die dynamische Kopplung mit den äußeren Kräften in den freien Bewegungsrichtungen und im Nullraum. Darüber hinaus kann ein zusätzlicher Integralterm dazu beitragen, die stationären Fehler in der Kontaktkraft zu reduzieren.

$$- \boldsymbol{K}_{\mathrm{fp}}\boldsymbol{F}_{\mathrm{e}} - \boldsymbol{K}_{\mathrm{fd}}\dot{\boldsymbol{F}}_{\mathrm{e}} - \boldsymbol{K}_{\mathrm{fi}} \int_{0}^{t} \boldsymbol{F}_{\mathrm{e}}\, dt \qquad (22)$$

Die Rückkopplung $\boldsymbol{F}_{\dot{\Phi}}^{\mathrm{ext}}$ kann leicht mit einem modernen Design eines externen Beobachters für den Endeffektor implementiert werden. Darüber hinaus ist das erhaltene Regelgesetz (21) in Richtung der Kontaktkraft frei von Verstärkungen, was einen Vorteil in Bezug auf den Abstimmungsaufwand darstellt. Fig. 1 veranschaulicht ein konzeptionelles Szenario, bei dem die kinematische Beschränkung in der Normalrichtung des Endeffektors aktiv ist und die unbeschränkte Aufgabe durch die Bewegung des Endeffektors gegeben ist (z. B. die Verfolgung eines bestimmten Profils). Die lokale Nullraumgeschwindigkeit v stellt das eindimensionale Nullraumverhalten dar. Falls, wie es beim Stand der Technik siehe (7) üblich war, keine dynamische Entkopplung durch die Steuerung erfolgt, sind bei hochdynamischen und schnellen Bewegungen Kraftfehler zu erwarten. Infolgedessen können Abweichungen der Kontaktkraft zu höheren Gelenkmomenten und Geschwindigkeiten führen, die die Sättigungsgrenzen erreichen, insbesondere wenn Stöße mit der Zwangsoberfläche auftreten. Dies führt dazu, dass die rückgekoppelten Regelungsgewinne nur lokal gültig sind und auf bestimmte Aufgabengeschwindigkeiten abgestimmt werden. Im Gegensatz dazu vermeidet das in (16) vorgeschlagene Regelgesetz solche Probleme, da eine dynamische Entkopplung, vorzugsweise eine vollständige dynamische Entkopplung, erreicht wird.

In der Regel wird der Kraftregler nicht ständig benötigt, sondern nur dann eingesetzt, wenn der Kontakt zur Umgebung bereits hergestellt ist. Um einen kontinuierlichen und fließenden Übergang zwischen Kraft- und Impedanzregelung zu erreichen, kann ein Zwischen-Sollwert eingeführt werden. Ein schneller Übergang zwischen verschiedenen Steuerungsaktionen kann zu einem diskontinuierlichen Verhalten der vorgegebenen Gelenkmomente führen. Um diese Diskontinuität zu vermeiden, kann ein Zwischensollwert verwendet werden, so dass sich der Steuereingang nicht sofort ändert. Dies geschieht mit Hilfe von Aktivierungsvariablen, die sich kontinuierlich von 0 auf 1 ändern und angeben, welcher Regler auf sanfte Weise ausgewählt wird. Bei ausreichender geometrischer Kenntnis der Umgebung kann man die Verstärkungen des Impedanzreglers in den freien Bewegungsrichtungen erhöhen (höhere Steifigkeitswerte einstellen), da die Wechselwirkungen in diesen Richtungen weniger wahrscheinlich sind. Auf diese Weise lässt sich auf der Ebene des Endeffektors eine bessere Leistung bei der Verfolgung der Trajektorienposition erzielen.

Die vorliegende Erfindung wird in Simulationen und Experimenten an einem DLR-KUKA LWR-IV+ Roboter getestet. Ein kartesischer Impedanzregler wird verwendet, um den anfänglichen Kontakt zwischen dem Roboter-Endeffektor und der Oberfläche zu schließen. In dem vorgeschlagenen Rahmen werden sowohl die Kraft- als auch die Impedanzsteuerung der gleichen Prioritätsebene zugeordnet. Die Interaktionskraft kann aus verschiedenen Quellen berechnet werden, z. B. über einen erweiterten momentum-basierten Beobachter, um die Kontaktkraft direkt im Aufgabenraum zu messen.

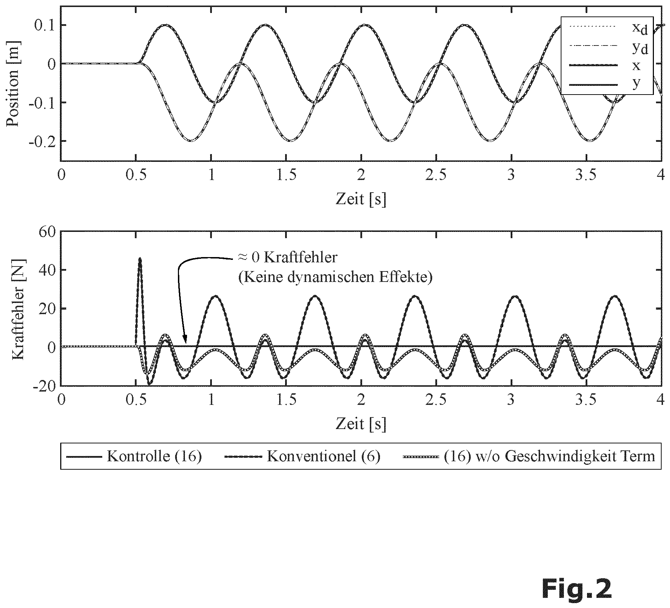

Fig. 2 zeigt die Ergebnisse einer ersten Simulation (Simulation Nr. 1). Es wird eine konstante Sollkraft in z-Richtung auf den Endeffektor aufgebracht, während eine kreisförmige Kreisbewegung in x/y-Richtung ausgeführt wird. Im oberen Diagramm der Fig. 2 sind die Soll- und Ist-Positionen eingezeichnet. Das untere Diagramm der Fig. 2 zeigt den Kraftfehler mit (16), (6) und (16) ohne den geschwindigkeitsabhängigen Term.

In der Simulation Nr. 1 wird eine Aufgabe gestellt, bei der der Manipulator schnelle Bewegungen in der x-y-Ebene (freie Richtungen) ausführt und eine gewünschte Kontaktkraft auf die Oberfläche ausübt (normale/beschränkte Richtung). Die gewünschten und tatsächlichen Trajektorien sind in Fig. 2 (oberes Diagramm) zusammen mit den entsprechenden Kraftfehlern (unteres Diagramm) dargestellt. Theoretisch gesehen zeigt der vorgeschlagene Ansatz einen Fehler von Null, da eine vollständige dynamische Kompensation erreicht wird. Darüber hinaus wird die Wirkung der geschwindigkeitsabhängigen Terme im gesamten Hybridregler hervorgehoben, indem die letzte Komponente der Regelungsrückführung $\dot{q}$ in (21) auf Null gesetzt wird.

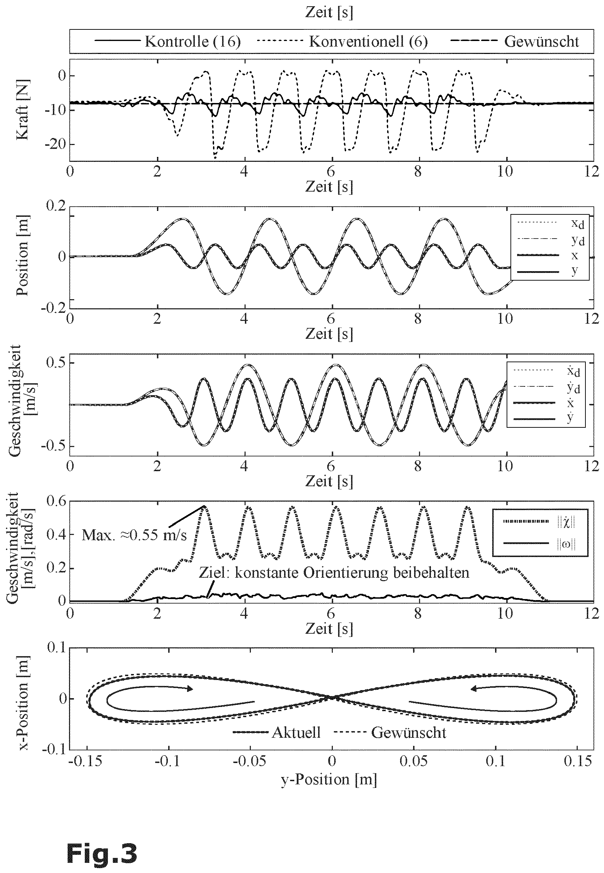

Simulation bzw. Versuch Nr. 1 demonstriert die Leistung der Kraftverfolgung gemäß der vorliegenden Erfindung durch die Steuerung der normalen Kontaktkraft entlang einer ebenen Oberfläche und die gleichzeitige Ausführung einer hochdynamischen gewünschten Bewegungstrajektorie. Die tatsächliche und die gewünschte Trajektorie sind in Fig. 3 dargestellt, wobei die maximale Endeffektor-Translationsgeschwindigkeitsnormwerte $\approx$ 0.55 m/s betragen können. Wobei die Kraftverfolgungsleistung (oberes Diagramm), die Position und die Geschwindigkeit der angewandten Trajektorie bzw. die euklidischen Normen der kartesischen Geschwindigkeit aufgetragen sind. In diesem Fall erreichte der Roboter eine beträchtliche Translationsgeschwindigkeit, wie in Fig. 3 anhand der Geschwindigkeitsnorm $\|\dot{\chi}\|$ gezeigt wird.

Bemerkenswert ist, dass die vorgeschlagene Methode im Vergleich zur konventionellen Technik eine bessere Kraftverfolgungsleistung aufweist. Der verbleibende Kraftfehler in der vorgeschlagenen Methode ist auf die Tatsache zurückzuführen, dass das Kraftkontrollgesetz auf der Grundlage einiger idealer Annahmen wie der Interaktion mit starren Umgebungen und keiner Flexibilität im Robotersystem ermittelt wurde. Diese nicht modellierte Dynamik kann als Störung behandelt werden, und ein zusätzlicher Integrator, z. B. (22), könnte ausreichen, um mit diesen unvorhersehbaren Fehlern umzugehen und die Robustheit gegenüber Kraftabweichungen im stationären Zustand zu erhöhen. Man beachte, dass die Reibungskräfte (z. B. die Oberflächenreibung) bereits durch die Rückkopplung der externen Kräfte $F_{\dot{x}}^{ext}$ im Aufgabenraum (21) berücksichtigt werden.

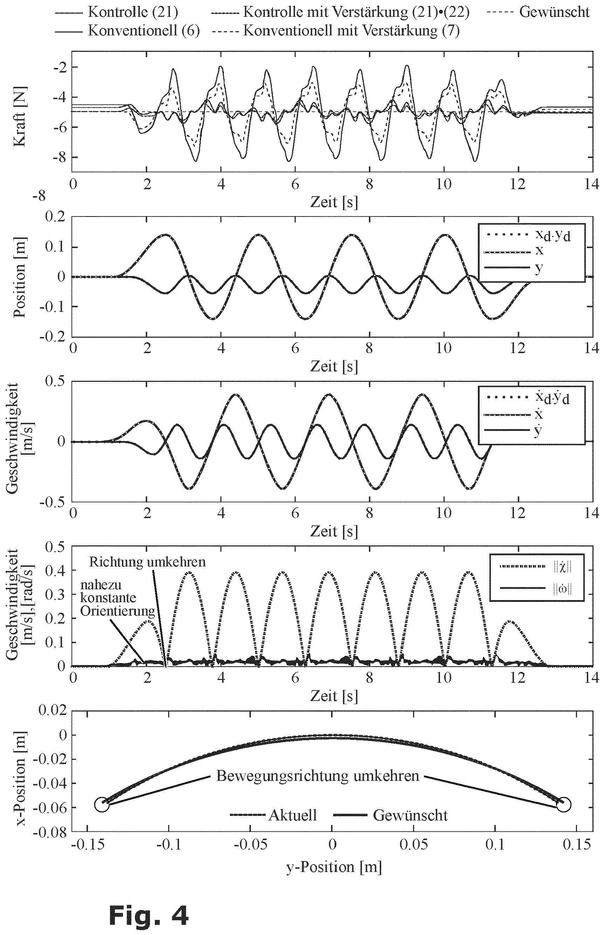

Fig. 4 zeigt Versuch Nr. 2. Dort wird die Bewegung auf einer ebenen Fläche mit bogenförmigem Verlauf betrachtet, um die Auswirkungen der Wahl der Regelverstärkungen zu untersuchen. Die Leistung der Kraftnachführung ist für den Fall enthalten, dass die Regelverstärkungen in (7) und (22) auf Null gesetzt werden, siehe oberes Diagramm. Die Position und die Geschwindigkeit der gewünschten und der tatsächlichen Trajektorien sind im zweiten und dritten Diagramm dargestellt. Die euklidische Norm der Endeffektor-Geschwindigkeit ist im vierten Diagramm dargestellt. Das untere Diagramm zeigt die zweidimensionale Ansicht der gewünschten (schwarz) und der tatsächlichen (blau) Trajektorie.

Versuch Nr. 2 wird durchgeführt, um die Auswirkungen der Einbeziehung von Verstärkungen in den Kraftregelkreis gemäß (7) zu überprüfen. Es ist erwähnenswert, dass die Einbeziehung von Kraftrückkopplungsverstärkungen die Fähigkeit, sich mit hoher Geschwindigkeit zu bewegen, aufgrund des Vorhandenseins von Instabilitäten verringert, die durch die zusätzliche Steuerungsaktion (PI/PID) im Zusammenhang mit den Abweichungen der Kontaktkraft verursacht werden. Der Endeffektor, folgt im Versuch Nr. 2 einer einfachen bogenförmigen Trajektorie, für einen Vergleich mit dem Stand der Technik, siehe Fig. 4. Die Parameter werden so eingestellt, dass die bestmögliche Leistung des Ansatzes gemäß dem Stand der Technik (konventioneller Ansatz) in Bezug auf den Kontaktkraftfehler zu erreichen. Erwartungsgemäß verringerten die Kraftregelungsgewinne den Fehler im stationären Zustand und die dynamischen Kraftschwankungen, allerdings auf Kosten der Ausführung der Bewegung mit geringerer Geschwindigkeit. Dennoch zeigt der vorgeschlagene Ansatz einen geringeren Kraftfehler als die konventionelle Methode.

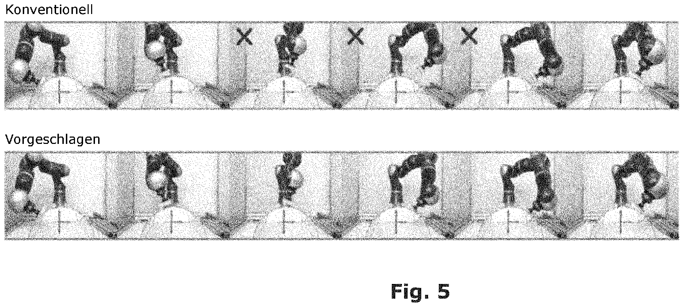

Fig. 5 zeigt Versuch Nr. 3a. Es ist eine Robotereinrichtung 2 dargestellt, mit der eine Oberfläche S schnell poliert werden soll. Der Bewegungsablauf für die konventionelle Methode (obere Reihe) und den erfindungsgemäßen Ansatz (untere Reihe) sind dargestellt. Dabei ist deutlich, dass bei der konventionellen Methode häufig der Kontakt zu der gekrümmten Oberfläche verloren wird (mit rotem x markiert), wohingegen gemäß der vorliegenden Erfindung (untere Reihe) der Kontakt zu der gekrümmten Oberfläche gehalten werden kann.

In Versuch Nr. 3 wird die Fähigkeit zur Durchführung einer hochdynamischen Bewegung auf der Oberfläche eines gekrümmten Objekts veranschaulicht. Die Aufgabe stellt ein Hochgeschwindigkeits-Polierszenario dar, bei dem die Kontaktkraft auf einer gekrümmten Oberfläche aufrechterhalten wird. Fig. 5 zeigt eine Fotoserie zu verschiedenen Zeitpunkten für die durchgeführte Aufgabe mit der klassischen Methode (obere Reihe) und dem erfindungsgemäßen Ansatz (untere Reihe). Es ist deutlich zu erkennen, dass die Anwendung der klassischen Methode eine hohe Abweichung in der Richtung der Oberflächennormalen verursacht, da der Kontakt zum Zielobjekt verloren geht.

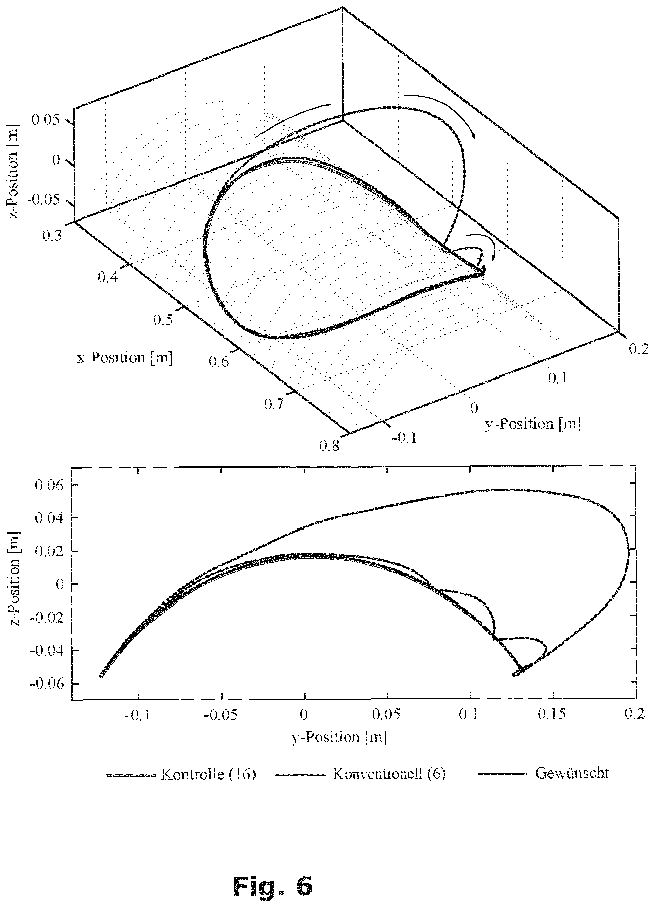

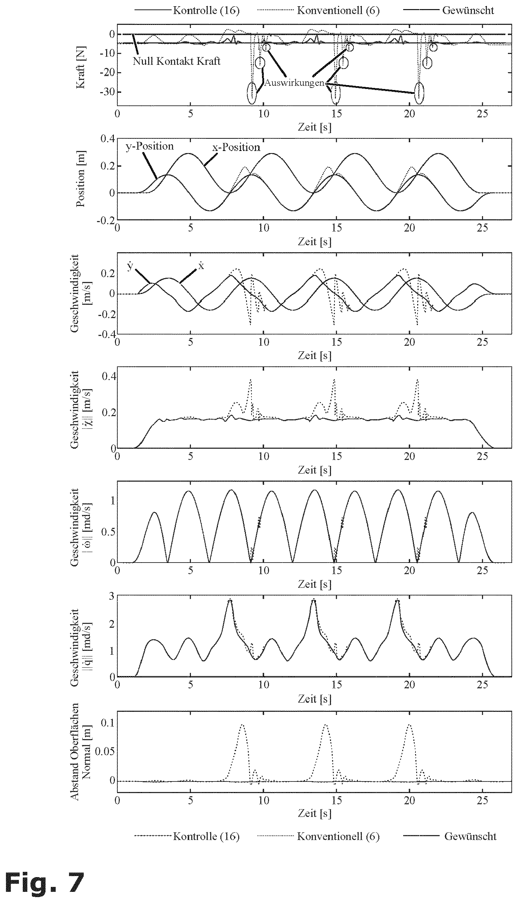

Die Trajektorien des Endeffektors sind in Fig. 6 dargestellt. Bemerkenswert ist, dass der Kontaktverlust mehrmals während der Trajektorie auftritt und zu Stößen mit der Oberfläche führt, siehe Fig. 6. Der vorgeschlagene Ansatz zeigt, dass bei der vorliegenden Erfindung die Kraftregulierung deutlich verbessert ist bei einer dynamisch anspruchsvollen Trajektorie auf einer gekrümmten Oberfläche. Die berührungslosen Phasen sind in Fig. 7 hervorgehoben (schattierte Bereiche) und können mit der euklidischen Norm der Gelenkgeschwindigkeiten $\|\dot{q}\|$ (Abbildung 6 der Fig. 7) in Verbindung gebracht werden. Interessanterweise führen die hohen Geschwindigkeiten zu den Phasen des Kontaktverlusts (Abheben) auch bei ähnlicher Geschwindigkeit im Aufgabenraum, siehe Abbildung 5 der Fig.7. Die Kraftverfolgung des Endeffektors ist in Abbildung 1 von Fig. 7 dargestellt. Die Position und Geschwindigkeit der angewandten Trajektorie, ausgedrückt in der Roboterbasis, sind in den Abbildungen 2 und 3 der Fig. 7 dargestellt. Die Norm der Translationsgeschwindigkeit des Endeffektors ist in Abbildung 4 der Fig. 7 dargestellt, die Norm der Rotationsgeschwindigkeit in Abbildung 5 der Fig. 7, die Geschwindigkeitsnorm im Gelenkraum in Abbildung 6 der Fig. 7 und die Positionsabweichung zwischen Werkzeug und Oberfläche (der Abstand entlang der der Oberflächennormale) in der unteren Abbildung dargestellt. Geometrisch gesehen ist die gesamte gewünschte Translationsgeschwindigkeit über die gekrümmte Oberfläche annähernd konstant. Die Rotationsgeschwindigkeit ändert sich jedoch kontinuierlich entlang der angewandten Trajektorie durch den Effekt der Krümmungsänderung in Bezug auf die Bewegung des Endeffektors. Das bedeutet, dass die betrachtete Trajektorie eine konstante Krümmung erreicht, wenn die Bewegung des Endeffektors rein in x-Richtung erfolgt (vollständig in x-Richtung ausgerichtet) und hohe Werte, wenn die Bewegung in senkrechter Richtung erfolgt. Die maximale Gelenkraumkrümmung von $\approx 2.9$ rad/s liegt sehr nahe an der Sättigungsgrenze, während die Spitzenwerte der Rotationsgeschwindigkeit im Aufgabenraum liegen. Während der hochdynamischen Phasen zeigt der vorgeschlagene Ansatz eine deutlich bessere Nachführleistung bei der Regelung der Kontaktkraft.

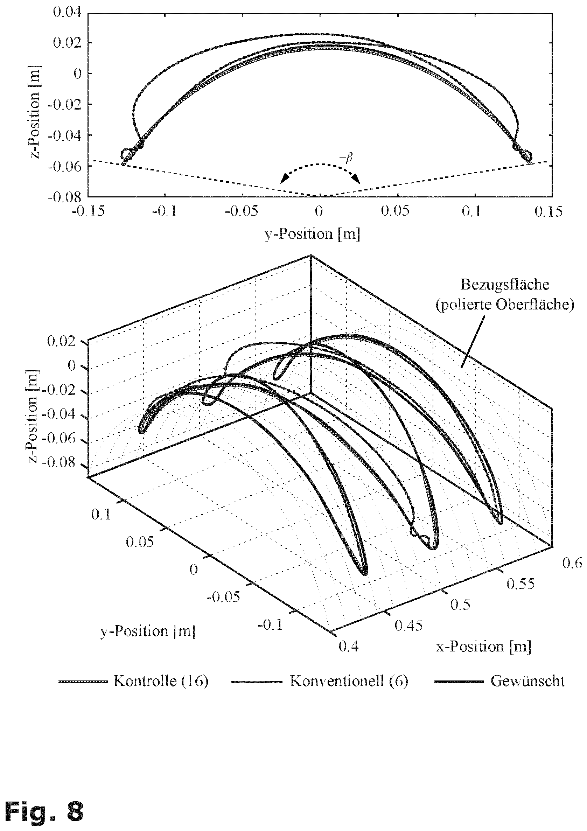

Fig. 8 zeigt Versuch Nr. 4a (variable Sollkraft). Bei diesem Versuch wird eine komplexe Trajektorie auf das Objekt beim Oberflächenpolieren angewendet. Die gewünschte Normalkraft (Anpressdruck) wird gleichzeitig über die Zeit variiert. Die oberen und unteren Abbildungen der Fig. 8 zeigen die Vorder- und dreidimensionale Ansichten der gewünschten bzw. tatsächlichen Trajektorien.

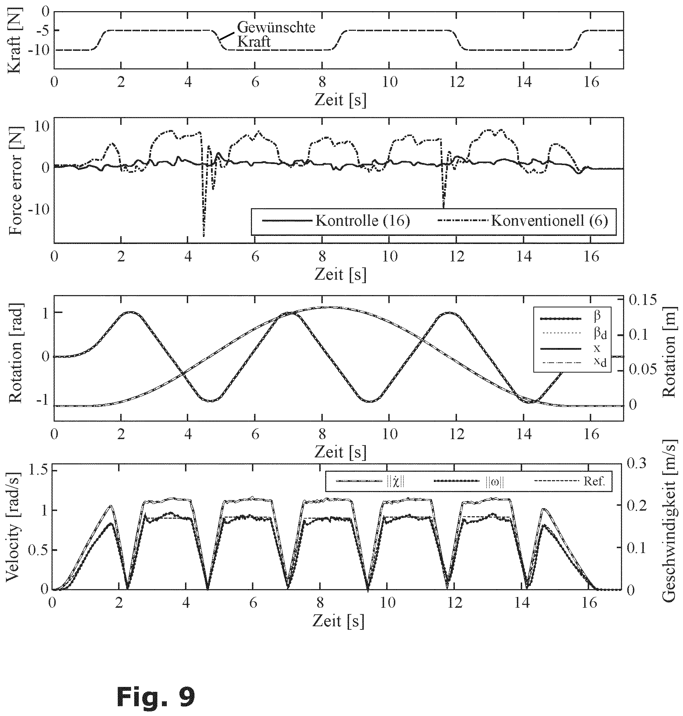

Fig. 9 zeigt Versuch Nr. 4b (zeitlich veränderliches Kraftprofil). Bei diesem Versuch wird die gewünschte Kontaktkraft zwischen 5 und 10 N variiert. Der Kraftverfolgungsfehler ist in der oberen Abbildung dargestellt, gefolgt von der gewünschten und der tatsächlichen (gemessenen) Kraft. Die in polaren/zylindrischen Koordinaten ausgedrückte Trajektorie ist in Abbildung 3 der Fig. 9 dargestellt, und die Geschwindigkeitsnormen der Aufgabe sind in der unteren Abbildung dargestellt.

Die Bewertung wie erfolgreich die Kraftverfolgung in Versuch Nr. 4 ist, erfolgt durch Vorgabe der gewünschten Kraft Trajektorie und die gleichzeitige Verfolgung eines bestimmten Pfades auf einer gekrümmten Oberfläche. Fig. 8 zeigt die dreidimensionale Ansicht der gewünschten und der tatsächlichen Position für die konventionelle bzw. die erfindungsgemäße Methode. Die Trajektorie wird durch einen zylindrischen Winkel, und die Längsachse x ausgedrückt, so dass eine visuelle Trennung zwischen dem Bewegungs- und den Kraftteilräumen erhalten wird. Die zeitlich veränderliche Krafttrajektorie und der Kraftverfolgungsfehler des Endeffektors sind in den Abbildungen 1 und 2 von Fig. 9 dargestellt. Die Position der angewandten Trajektorie und die Translations- und Rotationsnormen des Aufgabenraums Geschwindigkeitsnormen, ausgedrückt in der Roboterbasis, sind in den Abbildugen 3 bzw. 4 dargestellt.

Das Ziel der vorgeschlagenen Erfindung ist die Entkopplung von Kraft- und Bewegungsteilräumen. Das Kontrollschema ermöglicht die gleichzeitige Verfolgung der Kontaktkraft und der nachgiebigen Bewegung des Endeffektors unabhängig und auf derselben Prioritätsstufe. Daher wurde der Regelungsentwurf durch einen modellbasierten Ansatz durchgeführt, um die geschwindigkeitsabhängigen Terme vollständig zu kompensieren und auch die anderen Steuerungsaktionen und externen Kräfte zu berücksichtigen. Die Vorteile der vorliegenden Erfindung zeigen sich bei der Ausführung schneller Bewegungstrajektorien und der gleichzeitigen Steuerung der Kontaktkraft. Die erfindungsgemäße Kontrollstruktur hat einen signifikanten Effekt bei hochdynamischer Bewegungsausführung über gekrümmten Oberflächen im Vergleich zum konventionellen Ansatz. Die experimentellen Ergebnisse bestätigen, dass die Berücksichtigung der Geschwindigkeitsabhängigkeit im Kraftregelgesetz bei schnellen kraftgeregelten Aufgaben vorteilhaft ist.

**Patentansprüche**

1. Verfahren zum Steuern einer Robotereinrichtung mit einem Endeffektor, wobei

   - mittels einer Robotersteuerungseinrichtung die Robotereinrichtung gesteuert wird,

   **dadurch gekennzeichnet,**
   **dass** die Robotersteuerungseinrichtung die Robotereinrichtung mittels einer erweiterten kartesische Impedanzsteuerung steuert, bei der eine hybride Impedanz-Kraft-Steuerung durchgeführt wird, wobei ein nachgiebiges Verhalten mittels Impedanzsteuerung in zumindest einer freien Bewegungsrichtung und eine direkte Kraftsteuerung in zumindest einer eingeschränkten Richtungen ausgeführt wird, wobei bei der direkten Kraftsteuerung die dynamische Effekte, die aufgrund der Bewegung des Endeffektors auftreten, berücksichtigt werden.

2. Verfahren nach Anspruch 1, **dadurch gekennzeichnet, dass** die dynamischen Effekte im Regelungsgesetz für die direkte Kraftsteuerung zumindest mit dem folgenden Term berücksichtigt werden:

$$\Lambda_{\dot{\Phi}}(J_{\dot{\Phi}} M^{-1} C - \dot{J}_{\dot{\Phi}})\dot{q} .$$

3. Verfahren nach Anspruch 1 oder 2, **dadurch gekennzeichnet, dass** das Regelungsgesetz für die direkte Kraftsteuerung wie folgt lautet:

$$\begin{aligned}
F_{\dot{\Phi}}^{\mathrm{ctrl}} = & + F^{\mathrm{des}}(t) \\
& - \Lambda_{\dot{\Phi}} J_{\dot{\Phi}} M^{-1}(J_{\dot{x}}^T F_{\dot{x}}^{\mathrm{ctrl}} + J_v^T F_v^{\mathrm{ctrl}}) \\
& + \Lambda_{\dot{\Phi}} J_{\dot{\Phi}} M^{-1}(J_{\dot{x}}^T F_{\dot{x}}^{\mathrm{ext}} + J_v^T F_v^{\mathrm{ext}}) \\
& + \Lambda_{\dot{\Phi}}(J_{\dot{\Phi}} M^{-1} C - \dot{J}_{\dot{\Phi}})\dot{q} .
\end{aligned}$$

4. Verfahren nach einem der Ansprüche 1 bis 3, **dadurch gekennzeichnet, dass** in dem Regelungsgesetz für die direkte Kraftsteuerung die dynamische Kopplung mit den äußeren Kräften in den freien Bewegungsrichtungen und im Nullraum kompensiert.

5. Verfahren nach einem der Ansprüche 1 bis 4, **dadurch gekennzeichnet, dass** die direkte Kraftsteuerung dann eingesetzt wird, wenn der Kontakt zur Umgebung bereits hergestellt ist.

6. Verfahren nach Anspruch 5, **dadurch gekennzeichnet, dass** beim Übergang von Impedanzsteuerung zu direkter Kraftsteuerung der Übergang fließend erfolgt, dadurch, dass ein Zwischensollwert verwendet wird, so dass sich der Steuereingang nicht sofort ändert, wobei dies mit Hilfe von Aktivierungsvariablen geschieht, die sich kontinuierlich von 0 auf 1 ändern.

7. Verfahren nach einem der Ansprüche 1 bis 4, **dadurch gekennzeichnet, dass** zur Reduzierung der stationären Fehler in der Kontaktkraft der folgende zusätzlich Integralterm berücksichtigt wird

$$- K_{\text{fp}} F_{\text{e}} - K_{\text{fd}} \dot{F}_{\text{e}} - K_{\text{fi}} \int_0^t F_{\text{e}} \, dt$$

8. Robotersystem zum Steuern einer Robotereinrichtung mit

   - einer Robotereinrichtung mit Endeffektor, und
   - einer Robotersteuerungseinrichtung zum Steuern der Robotereinrichtung

   **dadurch gekennzeichnet,**
   **dass** die Robotersteuerungseinrichtung dazu ausgebildet ist, den Roboter mittels einer erweiterten kartesische Impedanzsteuerung zu steuern, bei der eine hybride Impedanz-Kraft-Steuerung durchführbar ist, wobei ein nachgiebiges Verhalten mittels Impedanzsteuerung in zumindest einer freien Bewegungsrichtung und eine direkte Kraftsteuerung in zumindest einer eingeschränkten Richtungen ausführbar ist, wobei bei der direkten Kraftsteuerung die dynamische Effekte, die aufgrund der Bewegung des Endeffektors auftreten, berücksichtigt sind.

9. Robotersystem nach Anspruch 8, **dadurch gekennzeichnet, dass** die Robotersteuerungseinrichtung dazu ausgebildet ist, dass die dynamischen Effekte im Regelungsgesetz für die direkte Kraftsteuerung zumindest mit dem folgenden Term berücksichtigt werden:

$$\Lambda_{\dot{\Phi}} (J_{\dot{\Phi}} M^{-1} C - \dot{J}_{\dot{\Phi}}) \dot{q}$$

10. Robotersystem nach Anspruch 8 oder 9, **dadurch gekennzeichnet, dass** die Robotersteuerungseinrichtung dazu ausgebildet ist, dass das Regelungsgesetz für die direkte Kraftsteuerung wie folgt lautet:

$$\begin{aligned} F_{\dot{\Phi}}^{\text{ctrl}} = {} & + F^{\text{des}}(t) \\ & - \Lambda_{\dot{\Phi}} J_{\dot{\Phi}} M^{-1} (J_{\dot{x}}^T F_{\dot{x}}^{\text{ctrl}} + J_v^T F_v^{\text{ctrl}}) \\ & + \Lambda_{\dot{\Phi}} J_{\dot{\Phi}} M^{-1} (J_{\dot{x}}^T F_{\dot{x}}^{\text{ext}} + J_v^T F_v^{\text{ext}}) \\ & + \Lambda_{\dot{\Phi}} (J_{\dot{\Phi}} M^{-1} C - \dot{J}_{\dot{\Phi}}) \dot{q} \, . \end{aligned}$$

11. Robotersystem nach einem der Ansprüche 8 bis 10, **dadurch gekennzeichnet, dass** die Robotersteuerungseinrichtung dazu ausgebildet ist, das Regelungsgesetz auszuführen, bei dem für die direkte Kraftsteuerung die dynamische Kopplung mit den äußeren Kräften in den freien Bewegungsrichtungen und im Nullraum kompensiert wird.

12. Robotersystem nach einem der Ansprüche 8 bis 11, **dadurch gekennzeichnet, dass** die Robotersteuerungseinrichtung dazu ausgebildet ist, dass die direkte Kraftsteuerung dann einsetzbar ist, wenn der Kontakt zur Umgebung bereits hergestellt ist.

**13.** Robotersystem nach Anspruch 12, **dadurch gekennzeichnet, dass** die Robotersteuerungseinrichtung dazu ausgebildet ist, dass beim Übergang von Impedanzsteuerung zu direkter Kraftsteuerung der Übergang fließend erfolgt, dadurch, dass ein Zwischensollwert verwendbar ist, so dass sich der Steuereingang nicht sofort ändert, wobei dies mit Hilfe von Aktivierungsvariablen geschieht, die sich kontinuierlich von 0 auf 1 ändern.

**14.** Robotersystem nach einem der Ansprüche 8 bis 13, **dadurch gekennzeichnet, dass** die Robotersteuerungseinrichtung dazu ausgebildet ist, dass zur Reduzierung der stationären Fehler in der Kontaktkraft der folgende zusätzlich Integralterm berücksichtigbar ist

$$- K_{\mathrm{fp}} F_{\mathrm{e}} - K_{\mathrm{fd}} \dot{F}_{\mathrm{e}} - K_{\mathrm{fi}} \int_0^t F_{\mathrm{e}}\, dt$$

**Fig.1**

Fig.2

**Fig.3**

Fig. 4

Konventionell

Vorgeschlagen

**Fig. 5**

**Fig. 6**

**Fig. 7**

Fig. 8

**Fig. 9**

**EUROPÄISCHER RECHERCHENBERICHT**

Europäisches Patentamt
European Patent Office
Office européen des brevets

Nummer der Anmeldung

EP 24 16 3926

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SHIKHA SHARMA ET AL: "Compliant Manipulation of Free-Floating Objects", ARXIV.ORG, CORNELL UNIVERSITY LIBRARY, 201 OLIN LIBRARY CORNELL UNIVERSITY ITHACA, NY 14853, 3. August 2020 (2020-08-03), XP081730838, DOI: 10.1109/ICRA.2018.8462889 * Abschnittte IV und V.A * | 1,5,7,8, 12,14 | INV. B25J9/16 |
| X | OH Y ET AL: "GENERAL TASK EXECUTION OF REDUNDANT MANIPULATORS WITH EXPLICIT NULL-MOTION CONTROL", PROCEEDINGS OF THE 1996 IEEE IECON: 22ND. INTERNATIONAL CONFERENCE ON INDUSTRIAL ELECTRONICS, CONTROL, AND INSTRUMENTATION. TAIPEI, AUG. 5 - 9, 1996; [PROCEEDINGS OF IEEE IECON: INTERNATIONAL CONFERENCE ON INDUSTRIAL ELECTRONICS, CONTROL, AND INSTRUM, Bd. CONF. 22, 5. August 1996 (1996-08-05), Seiten 1902-1908, XP000697096, ISBN: 978-0-7803-2776-4 | 1,4,5,8, 11,12 | |
| Y | * Abschnittte II und III * | 2,3,9,10 | RECHERCHIERTE SACHGEBIETE (IPC) B25J G05B |
| X | OH Y ET AL: "MOTION/FORCE DECOMPOSITION OF REDUNDANT MANIPULATOR AND ITS APPLICATION TO HYBRID IMPEDANCE CONTROL", PROCEEDINGS OF THE 1998 IEEE INTERNATIONAL CONFERENCE ON ROBOTICS AND AUTOMATION. ICRA '98. LEUVEN, BE, MAY 16 - 20, 1998; [PROCEEDINGS OF THE IEEE INTERNATIONAL CONFERENCE ON ROBOTICS AND AUTOMATION], NEW YORK, NY : IEEE, US, Bd. CONF. 15, 16. Mai 1998 (1998-05-16), Seiten 1441-1446, XP000790609, ISBN: 978-0-7803-4301-6 | 1,4,5,8, 11,12 | |
| Y | * Abschnittte 2-4 * | 2,3,9,10 | |

-/--

Der vorliegende Recherchenbericht wurde für alle Patentansprüche erstellt

| Recherchenort | Abschlußdatum der Recherche | Prüfer |
|---|---|---|
| Den Haag | 28. August 2024 | Prokopiou, Platon |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................
& : Mitglied der gleichen Patentfamilie, übereinstimmendes Dokument

EPO FORM 1503 03.82 (P04C03)

**EUROPÄISCHER RECHERCHENBERICHT**

Nummer der Anmeldung

EP 24 16 3926

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JUN WU ET AL: "Sliding mode hybrid impedance control of manipulators for complex interaction tasks", 2017 IEEE INTERNATIONAL CONFERENCE ON ADVANCED INTELLIGENT MECHATRONICS (AIM), IEEE, 3. Juli 2017 (2017-07-03), Seiten 1009-1014, XP033144451, DOI: 10.1109/AIM.2017.8014151 ISBN: 978-1-5090-5998-0 [gefunden am 2017-08-21] * Abchnittte II und III * ----- | 1,5,6,8, 12,13 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 28. August 2024 | Prokopiou, Platon |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)